(19) Europäisches Patentamt / European Patent Office / Office européen des brevets

(11) **EP 3 230 999 B1**

(12) **FASCICULE DE BREVET EUROPEEN**

(45) Date de publication et mention
de la délivrance du brevet:
**31.10.2018 Bulletin 2018/44**

(21) Numéro de dépôt: **15817465.6**

(22) Date de dépôt: **02.12.2015**

(51) Int Cl.:
***H01H 33/59*** *(2006.01)*

(86) Numéro de dépôt international:
**PCT/FR2015/053299**

(87) Numéro de publication internationale:
**WO 2016/092182 (16.06.2016 Gazette 2016/24)**

(54) **DISPOSITIF DE COUPURE DE COURANT CONTINU HAUTE TENSION**

HOCHSPANNUNGSGLEICHSTROMAUSLÖSUNGSVORRICHTUNG

HIGH VOLTAGE DC CURRENT TRIPOUT DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2014 FR 1462224**

(43) Date de publication de la demande:
**18.10.2017 Bulletin 2017/42**

(73) Titulaire: **Supergrid Institute
69100 Villeurbanne (FR)**

(72) Inventeurs:
• **LUSCAN, Bruno
69008 Lyon (FR)**
• **BERTINATO, Alberto
69008 Lyon (FR)**

• **CREUSOT, Christophe
69008 Lyon (FR)**

(74) Mandataire: **GIE Innovation Competence Group
310, avenue Berthelot
69372 Lyon Cedex 08 (FR)**

(56) Documents cités:
**EP-A1- 0 384 346     EP-A1- 0 431 510**

• **BONIN V E ET AL: "A METHOD OF CURRENT
INTERRUPTION IN HVDC NETWORKS BY MEANS
OF AC CIRCUIT-BREAKERS WITH ADAPTED
ARC CHARACTERISTICS AND ENERGY
ABSORBERS", INTERNATIONAL CONFERENCE
ON LARGE ELECTRIC SYSTEMS AT
HIGHTENSION, XX, XX, vol. 1, 24 août 1970
(1970-08-24), pages 1-15, XP000764894,**

**Description**

L'invention concerne les réseaux de transmission et/ou de distribution de courant continu sous tension élevée, généralement désignés sous l'acronyme HVDC. L'invention porte en particulier sur les dispositifs de coupure de courant de défaut destinés à de tels réseaux.

Les réseaux HVDC sont notamment envisagés comme une solution à l'interconnexion de sites de production d'électricité disparates ou non synchrones, apparaissant avec le développement des énergies renouvelables. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 50 kV et plus.

Pour de la transmission d'électricité point à point, un sectionnement peut être réalisé par l'intermédiaire d'un convertisseur en bout de ligne. Par contre, le sectionnement ne peut plus être réalisé par un tel convertisseur dans de la transmission multipoints. La coupure du courant continu dans de tels réseaux est un enjeu crucial conditionnant directement la faisabilité et le développement de tels réseaux.

Le document EP0431510 décrit notamment un dispositif de coupure pour courant continu haute tension.

Pour de plus bas niveaux de tension, on utilise traditionnellement des disjoncteurs mécaniques pour réaliser la coupure de courant, c'est à dire que la coupure du courant est obtenue uniquement par l'ouverture d'un élément interrupteur mécanique. Un tel élément interrupteur mécanique comporte deux pièces conductrices faisant contact qui sont en contact mécanique lorsque l'élément interrupteur est fermé et qui se séparent mécaniquement lorsque l'élément interrupteur est ouvert. Ces disjoncteurs mécaniques présentent plusieurs inconvénients notamment lorsqu'ils sont traversés par des courants importants.

La coupure mécanique se traduit par l'établissement d'un arc électrique entre les deux pièces conductrices, du fait des énergies importantes accumulées dans le réseau que le disjoncteur protège. Cet arc électrique dégrade d'une part par érosion les deux pièces conductrices faisant contact et d'autre part le milieu environnant par ionisation. De plus, le courant met un certain temps à s'interrompre du fait de cette ionisation. Cet arc électrique en dégradant les pièces conductrices faisant contact nécessite des opérations de maintenance contraignantes et coûteuses. La coupure du courant est en outre particulièrement difficile à réaliser dans un contexte courant continu et tension élevée, ces conditions tendant à entretenir l'arc électrique. En outre, quand bien même on arrive à dimensionner un -disjoncteur mécanique pour une application haute tension courant continu, celui-ci présente généralement un délai d'ouverture relativement important, incompatible avec la protection du réseau, par exemple lors de l'apparition d'un court-circuit.

L'invention vise à résoudre un ou plusieurs de ces inconvénients. L'invention vise notamment à fournir un dispositif de coupure HVDC permettant de réaliser d'assurer une protection du réseau en un temps réduit, et limitant fortement les pertes de conduction sur la ligne de transmission. L'invention porte ainsi sur un dispositif de coupure de courant pour courant continu haute tension, tel que défini dans la revendication 1 annexée.

L'invention porte également sur les variantes des revendications dépendantes. L'homme du métier comprendra que chacune des caractéristiques des variantes des revendications dépendantes peut être combinée indépendamment aux caractéristiques de la revendication 1 déposée, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- la figure 1 illustre un premier mode de réalisation d'un dispositif de coupure selon l'invention ;
- la figure 2 illustre un deuxième mode de réalisation d'un dispositif de coupure selon l'invention ;
- la figure 3 illustre un troisième mode de réalisation d'un dispositif de coupure selon l'invention ;
- la figure 4 est un diagramme illustrant le courant traversant un interrupteur d'une ligne de conduction principale en l'absence d'ouverture de cet interrupteur;
- la figure 5 est un diagramme illustrant le courant traversant un interrupteur d'une ligne de conduction secondaire en l'absence d'ouverture de l'interrupteur de la ligne de conduction principale ;
- la figure 6 illustre l'état d'un interrupteur de la ligne principale et d'un interrupteur de la ligne secondaire lors d'une détection d'une surintensité ;
- la figure 7 illustre les différences de potentiel respectives aux bornes de deux condensateurs lors de la détection d'une surintensité ;
- la figure 8 illustre une simulation du courant au niveau de la sortie du dispositif de coupure;
- la figure 9 illustre les courants traversant respectivement l'interrupteur de la ligne de conduction principale et un limiteur de courant lors de la détection d'une surintensité ;
- la figure 10 illustre les différences de potentiel aux bornes respectivement de deux condensateurs lors d'une détection de la surintensité;
- la figure 11 illustre la différence de potentiel aux bornes du condensateur de la ligne secondaire en fonction de la présence d'un parafoudre ;
- la figure 12 illustre le courant de ligne en fonction de la présence d'un parafoudre ;
- la figure 13 illustre le courant traversant le condensateur de la ligne secondaire en fonction de la présence d'un parafoudre ;

- la figure 14 illustre un quatrième mode de réalisation d'un dispositif de coupure selon l'invention ;
- la figure 15 illustre un cinquième mode de réalisation d'un dispositif de coupure selon l'invention.

L'invention propose un dispositif de coupure de courant pour courant continu haute tension. Le dispositif de coupure de courant comporte une ligne de conduction principale et une ligne de conduction secondaire, connectées en parallèle entre une borne d'entrée et une borne de sortie. Dans la ligne de conduction principale, un circuit inclut un limiteur de courant et un condensateur connectés en parallèle. Un interrupteur commandé est connecté en série avec ce circuit. Lorsque les interrupteurs commandés sont fermés, les lignes de conduction principale et secondaire forment un circuit oscillant aux bornes de l'interrupteur de la ligne de conduction principale, avec une amplitude d'oscillation de courant au moins égale au courant de limitation maintenu par le limiteur de courant. Le dispositif de coupure comprend en outre un circuit de commande présentant un mode de fonctionnement de coupure dans lequel il est configuré pour maintenir une commande d'ouverture de l'interrupteur commandé de la ligne de conduction principale et une commande de fermeture de l'interrupteur commandé de la ligne de conduction secondaire.

Ainsi, lors d'une surintensité, le limiteur de courant maintient le courant le traversant à un courant de limitation et la différence de potentiel aux bornes du limiteur de courant augmente jusqu'à ce que le courant de limitation soit atteint. Le condensateur connecté en parallèle du limiteur de courant est alors chargé. À la fermeture de l'interrupteur commandé de la ligne de conduction secondaire, le circuit oscillant formé force le courant traversant l'interrupteur de la ligne de conduction principale à passer par une valeur nulle lors de la décharge du condensateur s'étant préalablement chargé. Avec un maintien d'une commande d'ouverture sur l'interrupteur de la ligne de conduction principale, l'ouverture effective initiée pour cet interrupteur est aisément obtenue lorsque le courant le traversant atteint la valeur nulle, un éventuel arc électrique étant coupé ne s'opposant alors plus à son ouverture. Si à la coupure de l'arc électrique la distance entre contacts est suffisante il est possible de couper définitivement le passage du courant. Le dimensionnement de cet interrupteur en termes de pouvoir de coupure peut ainsi être réduit. Un tel interrupteur peut ainsi être un interrupteur conçu pour du courant alternatif, pour un coût réduit.

Un tel dispositif de coupure de courant pourra par exemple être dimensionné pour des tensions continues au moins égales à 10 kV, voire au moins égales à 50 kV, typiquement au moins égales à 100 kV, et potentiellement au moins égales à 300kV. Un tel dispositif de coupure de courant pourra également être dimensionné pour un courant continu de service au moins égal à 1 kA, voire au moins égal à 2 kA.

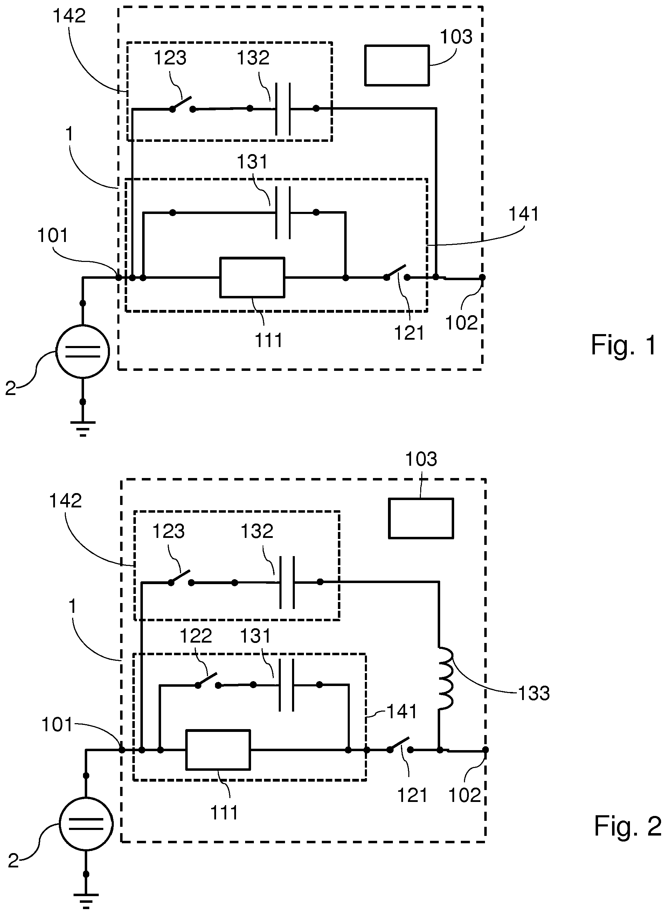

La figure 1 est une représentation schématique d'un premier mode de réalisation d'un exemple de dispositif de coupure 1 selon l'invention. Le dispositif 1 comporte une borne d'entrée 101, destinée à être connecté à une source de tension continue 2 connues en soi. Le dispositif 1 comporte par ailleurs une borne de sortie 102, destinée à alimenter par exemple une charge électrique ou un réseau électrique.

Le dispositif de coupure 1 comporte d'une part une ligne de conduction principale 141 et une ligne de conduction secondaire 142, connectées en parallèle entre les bornes 101 et 102. La ligne de conduction principale 141 est destinée à être traversée par le courant nominal fourni par la source de tension continue 2.

La ligne de conduction principale 141 comporte un circuit, incluant un limiteur de courant 111 et un condensateur 131 connectés en parallèle. Un interrupteur commandé 121 est connecté en série avec ce circuit, entre les bornes 101 et 102. Le limiteur de courant 111 est configuré pour maintenir le courant le traversant à un niveau inférieur ou égal à un courant de limitation. Le courant de limitation du limiteur 111 est par exemple au moins égal à deux fois le courant nominal du dispositif de coupure 1.

Lors d'une surintensité, par exemple due à un court-circuit entre la borne 102 et la terre, le profil du courant traversant un limiteur de courant comprend typiquement et transitoirement une rampe croissante jusqu'à un pic et franchit notamment une valeur d'activation du limiteur 111. Le limiteur 111 est mis en oeuvre de sorte que l'amplitude du pic soit au plus égale à 6 fois le courant nominal. Le courant redescend ensuite très rapidement jusqu'au courant de limitation auquel le limiteur 111 est maintenu. Afin d'éviter un échauffement excessif du limiteur 111, le dispositif 1 est configuré pour couper le courant traversant ce limiteur 111 en un temps réduit.

La ligne de conduction secondaire 142 comporte un interrupteur commandé 123 connecté en série avec un condensateur 132. Les interrupteurs 121 et 123 sont bien entendu dimensionnés pour pouvoir résister aux courants et différences de potentiels auxquels ils sont destinés à être soumis.

Le dispositif de coupure 1 comprend en outre un circuit de commande 103. Le circuit de commande 103 est configuré pour appliquer des signaux de commande aux interrupteurs commandés 121 et 123, en vue d'obtenir sélectivement leur ouverture/fermeture respective. Le circuit de commande 103 est en outre configuré pour détecter une surintensité. Le circuit 103 peut à cet effet recevoir une mesure du courant traversant le limiteur de courant 111 (par exemple envoyée par une sonde de courant) ou recevoir une mesure de la différence de potentiel aux bornes du limiteur de courant 111 ou du condensateur 131 (par exemple envoyée par un voltmètre). La détection de la surintensité peut être réalisée par le limiteur de courant 111 lui-même. Ainsi, si le franchissement d'un seuil de courant ou de différence de potentiel est détecté par le circuit 103, celui-ci peut basculer d'un premier mode de fonctionnement dans lequel le dispositif 1 doit conduire un courant nominal entre les bornes 101 et 102, vers un deuxième mode de fonctionnement dans lequel le dispositif 1 doit couper le courant entre les bornes 101 et 102.

Dans le premier mode de fonctionnement, le circuit 103 maintient l'interrupteur 123 ouvert pour éviter la conduction dans la ligne de conduction secondaire 142, et maintient l'interrupteur 121 fermé pour garantir la conduction dans la ligne de conduction principale 141 à travers le limiteur de courant 111.

Dans le deuxième mode de fonctionnement, le circuit 103 génère une commande d'ouverture de l'interrupteur 121 et une commande de fermeture de l'interrupteur 123. Avantageusement, le circuit 103 détecte au préalable l'apparition d'une surintensité lors du franchissement du courant d'activation, et génère la commande d'ouverture de l'interrupteur 121 seulement après un délai d'attente. Le courant d'activation pourra par exemple être au moins égal à 4 fois le courant nominal, afin de limiter des ouvertures intempestives de l'interrupteur 121.

Le délai d'attente permet de garantir que le limiteur de courant 111 a atteint une phase de maintien du courant de limitation. Dans cette phase de maintien, la différence de potentiel aux bornes du limiteur de courant 111 a permis de charger le condensateur 131. Le délai d'attente entre la détection de la surintensité et la génération de la commande d'ouverture de l'interrupteur 121 est par exemple au moins égal à 5 ms, voire au moins égal à 10 ms. Afin de de ne pas maintenir le limiteur de courant 111 pendant un temps excessif à son courant de limitation, le délai d'attente entre la détection de la surintensité et la génération de la commande d'ouverture de l'interrupteur 121 est par exemple au plus égal à 50 ms, voire au plus égal à 30 ms.

Dans le deuxième mode de fonctionnement, le circuit 103 génère avantageusement la commande de fermeture de l'interrupteur 123 après la génération de la commande d'ouverture de l'interrupteur 121. Ce décalage de génération de la commande de fermeture de l'interrupteur 123 permet de garantir que la formation du circuit oscillant induisant un passage à zéro du courant à travers l'interrupteur 121 est bien obtenue alors que la commande d'ouverture de l'interrupteur 121 est appliquée et que l'ouverture par écartement des contacts de l'interrupteur 121 est bien initiée. Le circuit oscillant est ici formé par l'intermédiaire des condensateurs 131 et 132 et des inductances de câblage des lignes de conduction primaire et secondaire. Ce délai d'attente permet également de tenir compte du décalage entre l'application de la commande d'ouverture sur l'interrupteur 121 et l'effet de cette commande, pour un interrupteur 121 du type mécanique. Ce décalage entre la commande d'ouverture de l'interrupteur 121 et la commande de fermeture de l'interrupteur 123 est par exemple au moins égal à 500 µs. Afin de limiter au maximum le temps de fonctionnement du limiteur de courant 111 à son courant de limitation, et afin de limiter le temps de présence d'un arc dans l'interrupteur 121 après l'application d'une commande d'ouverture, ce décalage entre les commandes est avantageusement au plus égal à 5 ms, et de préférence au plus égal à 3ms.

La réduction du temps de fonctionnement du limiteur de courant 111 à son courant de limitation durant le deuxième mode de fonctionnement pourra en outre faciliter une phase ultérieure de basculement vers le premier mode de fonctionnement, par une nouvelle fermeture de l'interrupteur 121. Un limiteur de courant de type à supraconducteur nécessitera un temps avant d'être à nouveau mis en service, d'autant plus important qu'il aura été échauffé longtemps en mode de limitation de courant.

Par ailleurs, le condensateur 132 permet de couper le courant continu dans la ligne de conduction secondaire lorsqu'on a obtenu l'ouverture de l'interrupteur 121 et la suppression d'un éventuel arc.

Le limiteur de courant 111 est avantageusement du type SCFCL. Ainsi, dans le premier mode de fonctionnement, le limiteur de courant 111 a une différence de potentiel nulle entre ses bornes et permet donc de limiter les pertes induites par le dispositif de coupure de courant 1. Le limiteur de courant 111 peut en particulier être du type résistance supraconductrice. Un tel limiteur de courant 111 de type résistance supraconductrice est typiquement prévu pour faire apparaître une résistance entre ses bornes si sa température augmente du fait de l'apparition d'une surintensité, afin de limiter l'amplitude de la surintensité de court-circuit. Un tel limiteur de courant 111 comprend par exemple un barreau de matériau supraconducteur traversé par le courant nominal entre les bornes 101 et 102. Le barreau de matériau supraconducteur est baigné dans un bain d'azote liquide afin de le maintenir en dessous de sa température critique durant le premier mode de fonctionnement. Le limiteur de courant 111 peut comporter une composante inductive.

Un autre type de limiteur de courant 111 peut bien entendu être envisagé, en particulier un limiteur de courant incluant des IGBT et dont la structure est connue en soi.

L'interrupteur 121 est avantageusement un interrupteur électromécanique, notamment du fait des faibles pertes en ligne qu'il est capable de générer.

La figure 2 illustre un deuxième mode de réalisation d'un exemple de dispositif de coupure 1 selon l'invention. Dans ce mode de réalisation, la ligne de conduction secondaire inclut une inductance 133 connectée en série avec l'interrupteur 123. Indépendamment de l'inductance 133, le dispositif de coupure 1 comporte ici un interrupteur 122 connecté en série avec le condensateur 131. L'interrupteur 122 est maintenu fermé dans les premier et deuxième modes de fonctionnement. La structure des autres composants du dispositif de coupure 1 de la figure 2 est par ailleurs identique à celle du dispositif de coupure de la figure 1. Une telle inductance 133 permet de définir avec précision la fréquence de résonance du circuit oscillant formé lors de la fermeture de l'interrupteur 123. En effet, la valeur d'inductance de cette inductance 133 sera alors prépondérante par rapport aux inductances parasites dans le circuit oscillant pour la détermination de la fréquence de résonance du circuit oscillant.

La détermination des caractéristiques du condensateur 131, du condensateur 132, et dans ce cas particulier de l'inductance 133, pourra être réalisée de la façon suivante.

On fixe tout d'abord la valeur fr de la fréquence de résonance que l'on souhaite pour le circuit oscillant, ainsi que la valeur Io de l'amplitude minimale d'une oscillation lors de la fermeture de l'interrupteur 123. Io doit respecter la condition Io > Inl, avec Inl le courant de limitation du limiteur de courant 111. Inl est par exemple égal à deux fois le courant nominal du dispositif de coupure 1.

Pour l'exemple de la figure 2, on obtient les équations suivantes :

$$fr = \frac{1}{2\pi\sqrt{L * Ceq}}$$

$$Io = Vnl * \sqrt{Ceq / L}$$

$$\frac{1}{Ceq} = \frac{1}{C131} + \frac{1}{C132}$$

Avec :
Vnl la différence de potentiel entre les bornes du limiteur de courant 111 lorsqu'il maintient son courant de limitation Inl, Ceq la capacité équivalente des condensateurs 131 et 132 en série dans le circuit oscillant formé, C131 la capacité du condensateur 131, C132 la capacité du condensateur 132, et L la valeur d'inductance de l'inductance 133.

D'autres critères de dimensionnement peuvent bien entendu être pris en compte, par exemple pour limiter la quantité d'énergie stockée dans le condensateur 131 lors de l'apparition d'une surintensité.

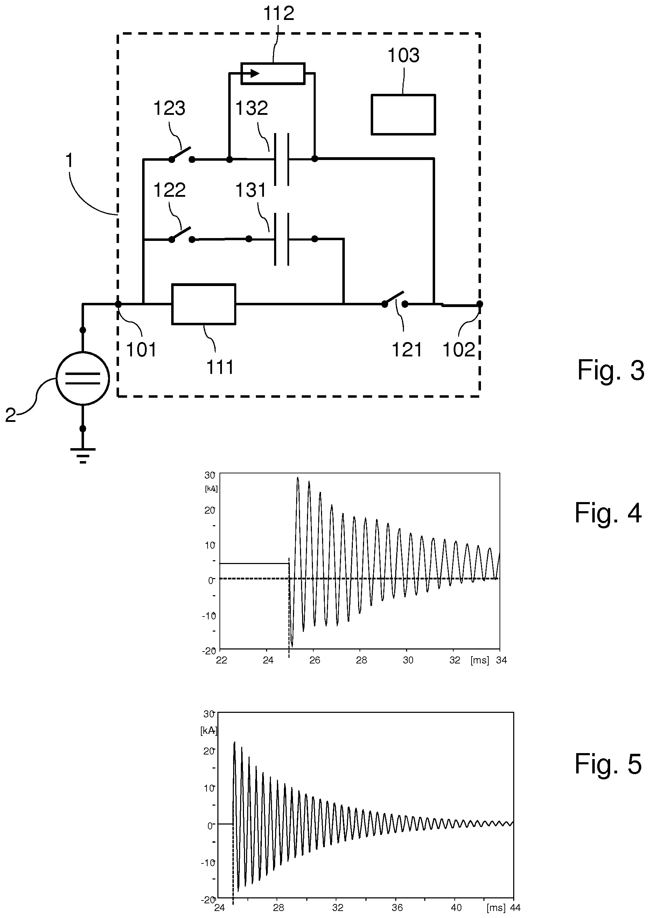

Les figures 4 et 5 sont des diagrammes de simulation d'un exemple de dispositif de coupure 1 selon la figure 2. Ces diagrammes permettent d'illustrer le fonctionnement du dispositif de coupure 1, lors de l'apparition d'une surintensité. La figure 4 illustre le courant traversant l'interrupteur 121. La figure 5 illustre le courant traversant le condensateur 132.

On suppose qu'une surintensité apparaît à l'instant t=0 et que le limiteur de courant 111 se stabilise rapidement à son courant de limitation. Le condensateur 131 est alors chargé. Le circuit de commande 103 génère une commande de fermeture et l'interrupteur 123 ferme à l'instant t=25ms. Dès lors, la ligne de conduction principale 141 et la ligne de conduction secondaire 142 forment le circuit oscillant. Pour mieux illustrer le fonctionnement du circuit oscillant formé lors de la fermeture de l'interrupteur 123, la simulation est illustrée sans ouverture de l'interrupteur 121.

Comme illustré à la figure 5, à partir de t=25ms, le condensateur 131 se décharge dans le circuit oscillant, ce qui induit des oscillations de courant dans le circuit oscillant. Le circuit oscillant est dimensionné pour qu'au moins une oscillation présente une amplitude au moins égale au courant de limitation de courant du limiteur de courant 111. Ainsi, comme illustré à la figure 4, le courant traversant l'interrupteur 121 passe par une valeur nulle à au moins une oscillation. Ainsi, si le circuit 103 applique une commande d'ouverture de l'interrupteur 121, lorsque ce courant prend une valeur nulle, l'arc électrique éventuellement présent durant la séparation initiale des contacts de cet interrupteur est coupé. Ainsi, l'interrupteur 121 peut être un interrupteur standard pour la coupure du courant alternatif, avec un pouvoir de coupure relativement réduit

La fréquence de résonance du circuit oscillant formé est avantageusement inférieure ou égale à 5 kHz. Ainsi, avec I le courant traversant l'interrupteur 121, la valeur dI/dt (par exemple inférieure à 500A/μs) est suffisamment réduite pour faciliter l'ouverture effective de l'interrupteur 121 lors du maintien de sa commande d'ouverture. Avantageusement, la fréquence de résonance du circuit oscillant formé est avantageusement supérieure ou égale à 500 Hz pour obtenir une ouverture effective rapide de l'interrupteur 121 ou pour générer plusieurs passages à zéro du courant à travers l'interrupteur 121, si celui-ci n'est pas ouvert immédiatement. Un exemple de dimensionnement du circuit oscillant est détaillé par la suite en référence aux modes de réalisation de la figure 2.

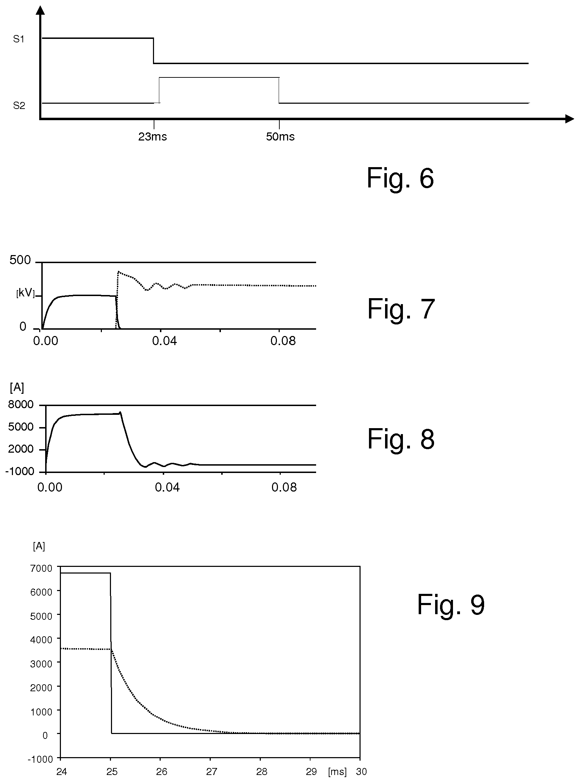

La figure 6 illustre un exemple de chronogramme des états d'ouverture/fermeture des interrupteurs 121 et 123 lors de l'apparition d'une surintensité. L'instant t=0 correspond à l'apparition de la surintensité. Le circuit 103 commande l'ouverture de l'interrupteur 121 à l'instant t= 23ms et commande la fermeture de l'interrupteur 123 à l'instant t= 25ms.

Bien que non illustré, le circuit de commande 103 peut ensuite appliquer une commande d'ouverture sur l'interrupteur 123. Cette commande d'ouverture est par exemple réalisée après un temps suffisant pour que l'interrupteur 121 ait pu s'ouvrir et que le courant traversant la borne de sortie 102 soit nul. Cette commande d'ouverture pourra par exemple être décalée d'une durée au moins égale à 5ms par rapport à la commande de fermeture de ce même interrupteur 123, ce décalage étant par exemple de 25 ms. L'ouverture de l'interrupteur 123 permettra de former à nouveau le circuit oscillant après une remise en conduction du dispositif de coupure 1.

La figure 7 est un diagramme d'une simulation de différences de potentiel respectives aux bornes du condensateur 131 (courbe en trait plein) et aux bornes du condensateur 132 (courbe en pointillés). La figure 8 est un diagramme d'une simulation du courant au niveau de la borne 102. La figure 9 illustre respectivement le courant à travers l'interrupteur 121 (trait plein) et le courant à travers le limiteur de courant 111 (pointillés).

Lors de l'apparition de la surintensité, la différence de potentiel aux bornes du condensateur 131 suit une rampe avant d'atteindre la valeur Vnl. Lors de la fermeture de l'interrupteur 123, les oscillations induites dans le circuit oscillant permettent l'ouverture de l'interrupteur 121 à courant nul. Dès lors, la différence de potentiel aux bornes du limiteur de courant 111 chute, et le courant au niveau de la borne 102 devient également rapidement nul, le condensateur 132 bloquant le courant continu dans la ligne de conduction secondaire.

La figure 3 illustre un troisième mode de réalisation d'un exemple de dispositif de coupure 1 selon l'invention. Dans ce mode de réalisation, la ligne de conduction secondaire inclut un parasurtenseur 112 connecté en parallèle du condensateur 132. Indépendamment du parasurtenseur 112, le dispositif de coupure 1 comporte ici un interrupteur 122 connecté en série avec le condensateur 131. La structure des autres composants du dispositif de coupure 1 de la figure 3 est par ailleurs identique à celle du dispositif de coupure de la figure 1.

Le parasurtenseur 112 permet de limiter l'amplitude de la différence de potentiel aux bornes du condensateur 132 et permet d'absorber l'énergie inductive stockée dans la ligne électrique connectée à la borne 102.

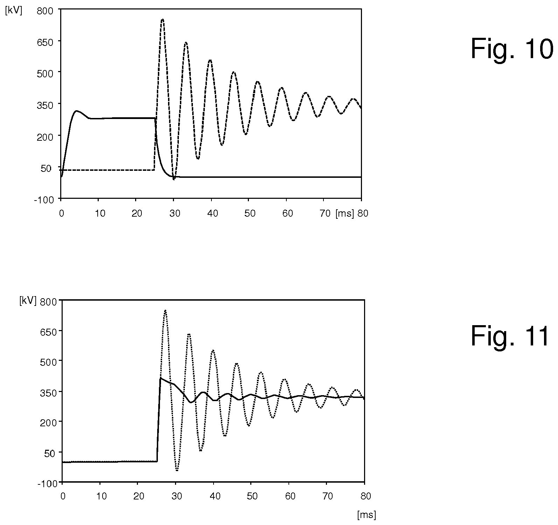

La figure 10 illustre les différences de potentiel respectives aux bornes des condensateurs 131 (trait plein) et 132 (pointillés) en l'absence de parasurtenseur 112.

La figure 11 illustre comparativement les différences de potentiel respectives aux bornes du condensateur 132 en présence d'un parasurtenseur 112 (trait plein) et en l'absence de ce parasurtenseur (pointillés).

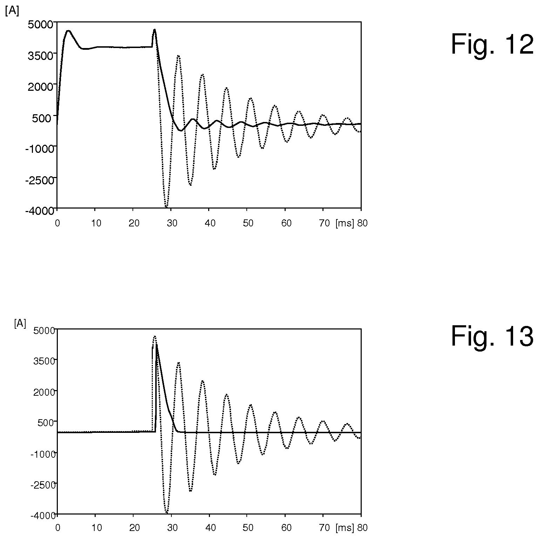

La figure 12 illustre comparativement le courant au niveau de la borne 102 en présence d'un parasurtenseur (trait plein) et en l'absence de ce parasurtenseur (pointillés).

La figure 13 illustre comparativement le courant traversant le condensateur 132 en présence d'un parasurtenseur 112 (trait plein) et en l'absence de ce parasurtenseur (pointillés).

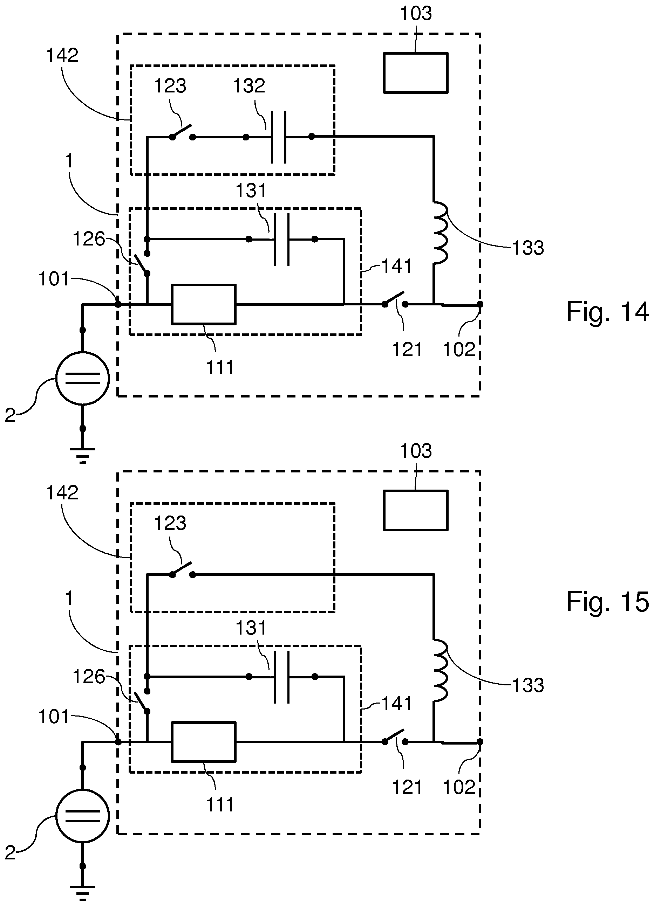

La figure 14 illustre un quatrième mode de réalisation d'un exemple de dispositif de coupure 1 selon l'invention. Ce mode de réalisation diffère structurellement du deuxième mode de réalisation par la suppression de l'interrupteur 122 en série avec le condensateur 131 et par l'inclusion d'un interrupteur commandé 126 connecté entre d'une part la borne 101, et d'autre part un noeud de connexion entre la ligne de conduction secondaire et le condensateur 131. Le circuit oscillant inclut ici les condensateurs 131 et 132 et l'inductance 133.

La logique de commande des interrupteurs commandés est identique à celle du deuxième mode de réalisation. L'interrupteur 126 est maintenu fermé dans les premier et deuxième modes de fonctionnement.

La figure 15 illustre un cinquième mode de réalisation d'un exemple de dispositif de coupure selon l'invention. Ce mode de réalisation diffère structurellement du quatrième mode de réalisation par une connexion directe entre l'interrupteur 123 et l'inductance 133 en remplacement du condensateur 132. Le circuit oscillant inclut ici le condensateur 131 et l'inductance 133.

La logique de commande des interrupteurs commandés est identique à celle du deuxième mode de réalisation. L'interrupteur 126 est maintenu fermé dans le premier mode de fonctionnement. Une commande d'ouverture de l'interrupteur 126 est appliquée dans le deuxième mode de fonctionnement. L'interrupteur 126 ouvert permet de couper le courant continu dans la branche de conduction secondaire. La commande d'ouverture de l'interrupteur 126 peut précéder la commande de fermeture de l'interrupteur 123.

La plupart des surintensités sont transitoires et ne sont pas liées à un court-circuit permanent. Par conséquent, le dispositif de coupure 1 est avantageusement configuré pour mettre en oeuvre un cycle de type OFO, l'ouverture de l'interrupteur 121 dans le deuxième mode de fonctionnement étant suivie d'une décharge du condensateur 132 et d'une tentative de fermeture de cet interrupteur 121 pour déterminer si le défaut est persistant, puis d'une nouvelle ouverture de cet interrupteur 121 si on a déterminé que le défaut est effectivement persistant.

Dans les différents modes de réalisation illustrés, on peut envisager de connecter un autre limiteur de courant (non illustré) en série entre les bornes 101 et 102. Un tel limiteur de courant pourra être de type inductif et permettra de modifier le dimensionnement des différents interrupteurs du dispositif de coupure de courant 1. Un tel limiteur de courant s'avère en particulier avantageux en combinaison avec le cinquième mode de réalisation.

Dans les différents modes de réalisation, on peut envisager de disposer un parasurtenseur en parallèle aux bornes de l'interrupteur 121.

## Revendications

1. Dispositif de coupure de courant (1) pour courant continu haute tension, comprenant :

   - des première et deuxième bornes (101, 102) ;
   - une ligne de conduction principale (141) et une ligne de conduction secondaire (142) étant connectées en parallèle entre les première et deuxième bornes;
   - la ligne de conduction principale (141) comprenant un premier interrupteur commandé (121) et connecté en série avec un circuit incluant, connectés en parallèle, un premier condensateur (131) et un limiteur de courant (111) configuré pour maintenir le courant le traversant à un niveau inférieur ou égal à un courant de limitation ;

- la ligne de conduction secondaire (142) comprenant un deuxième interrupteur commandé (123), les lignes de conduction principale et secondaire formant un circuit oscillant aux bornes du premier interrupteur commandé lorsque les premier et deuxième interrupteurs commandés sont fermés, avec une amplitude d'oscillation au moins égale au courant de limitation du limiteur de courant lorsque ce circuit limiteur de courant est traversé par ledit courant de limitation ;

- un circuit de commande (103) présentant un premier mode de fonctionnement dans lequel il est configuré pour maintenir le premier interrupteur (121) fermé et pour maintenir le deuxième interrupteur ouvert (123), et un deuxième mode de fonctionnement dans lequel il est configuré pour maintenir une commande d'ouverture du premier interrupteur (121) et maintenir une commande de fermeture du deuxième interrupteur (123).

2. Dispositif de coupure de courant (1) selon la revendication 1, dans lequel ledit limiteur de courant (111) est du type résistance supraconductrice.

3. Dispositif de coupure de courant (1) selon la revendication 1 ou 2, dans lequel ladite ligne de conduction secondaire comprend un deuxième condensateur connecté en série avec ledit deuxième interrupteur commandé.

4. Dispositif de coupure de courant (1) selon l'une quelconque des revendications précédentes, dans lequel la fréquence de résonance dudit circuit oscillant formé est inférieure ou égale à 5 kHz et/ou la dérivée du courant dans le circuit oscillant par rapport au temps est au plus égale à 500A/$\mu$s.

5. Dispositif de coupure de courant (1) selon l'une quelconque des revendications précédentes, dans lequel la fréquence de résonance dudit circuit oscillant formé est supérieure ou égale à 500 Hz.

6. Dispositif de coupure de courant (1) selon l'une quelconque des revendications précédentes, dans lequel la ligne de conduction secondaire comprend une inductance (133) connectée en série avec ledit deuxième interrupteur (123).

7. Dispositif de coupure de courant (1) selon l'une quelconque des revendications précédentes, dans lequel ledit circuit de commande (103) est configuré pour détecter une surintensité dans le premier mode de fonctionnement et configuré pour générer un signal d'ouverture du premier interrupteur (121) au plus 50 ms après ladite détection de la surintensité.

8. Dispositif de coupure de courant (1) selon l'une quelconque des revendications précédentes, dans lequel ledit circuit de commande (103) dans le deuxième mode de fonctionnement est configuré pour générer un signal d'ouverture du premier interrupteur (121) et configuré pour générer un signal de fermeture du deuxième interrupteur (123) au moins 500 $\mu$s après la génération du signal d'ouverture du premier interrupteur (121).

9. Dispositif de coupure de courant (1) selon l'une quelconque des revendications précédentes, dans lequel un parasurtenseur (112) est connecté en parallèle du deuxième condensateur (132).

10. Dispositif de coupure de courant (1) selon l'une quelconque des revendications précédentes, dimensionné pour l'application d'une différence de potentiel au moins égale à 10 kV et d'un courant au moins égal à 1kA entre les première et deuxième bornes.

**Patentansprüche**

1. Stromunterbrechungsvorrichtung (1) für Hochspannungsgleichstrom, umfassend:

- eine erste und zweite Klemme (101, 102),
- eine Hauptverbindungsleitung (141) und eine Sekundärverbindungsleitung (142), die zwischen der ersten und zweiten Klemme parallel geschaltet sind,
- wobei die Hauptverbindungsleitung (141) einen ersten Schalter (121), der gesteuert ist und mit einem Schaltkreis in Reihe geschaltet ist, parallel geschaltet, einen ersten Kondensator (131) und einen Strombegrenzer (111) aufweist, der konfiguriert ist, um den durchfließenden Strom auf einem Niveau zu halten, das niedriger oder gleich einem Begrenzungsstrom ist,
- wobei die Sekundärverbindungsleitung (142) einen zweiten gesteuerten Schalter (123) aufweist, wobei die Haupt- und Sekundärverbindungsleitung, wenn der erste und der zweite gesteuerte Schalter geschlossen sind, einen Schwingkreis an den Klemmen des ersten gesteuerten Schalters mit einer Schwingungsamplitude bilden, die mindestens gleich dem Begrenzungsstrom ist, wenn diese Strombegrenzungsschaltung von dem Begrenzungsstrom durchflossen wird,
- einen Steuerkreis (103), der eine erste Betriebsart, in der er konfiguriert ist, um den ersten Schalter (121) geschlossen zu halten und um den zweiten Schalter (123) offen zu halten, und eine zweite Betriebsart aufweist, in der er konfiguriert ist, um einen Öffnungsbefehl des ersten Schalters (121) zu halten und einen Schließbefehl des zweiten Schalters (123) zu halten.

**2.** Stromunterbrechungsvorrichtung (1) nach Anspruch 1, wobei der Strombegrenzer (111) vom Typ des supraleitenden Widerstands ist.

**3.** Stromunterbrechungsvorrichtung (1) nach Anspruch 1 oder 2, wobei die Sekundärverbindungsleitung einen zweiten Kondensator aufweist, der mit dem zweiten gesteuerten Schalter in Reihe geschaltet ist.

**4.** Stromunterbrechungsvorrichtung (1) nach einem der vorhergehenden Ansprüche, wobei die Resonanzfrequenz des gebildeten Schwingkreises kleiner oder gleich 5 kHz ist und/oder die Ableitung des Stroms in dem Schwingkreis in Bezug auf die Zeit höchstens gleich 500A/$\mu$s ist.

**5.** Stromunterbrechungsvorrichtung (1) nach einem der vorhergehenden Ansprüche, wobei die Resonanzfrequenz des gebildeten Schwingkreises größer oder gleich 500 Hz ist.

**6.** Stromunterbrechungsvorrichtung (1) nach einem der vorhergehenden Ansprüche, wobei die Sekundärverbindungsleitung eine Drosselspule (133) aufweist, die mit dem zweiten Schalter (123) in Reihe geschaltet ist.

**7.** Stromunterbrechungsvorrichtung (1) nach einem der vorhergehenden Ansprüche, wobei der Steuerkreis (103) konfiguriert ist, um einen Überstrom in der ersten Betriebsart zu erfassen und konfiguriert ist, um ein Signal zum Öffnen des ersten Schalters (121) höchstens 50 ms nach dem Erfassen des Überstroms zu erzeugen.

**8.** Stromunterbrechungsvorrichtung (1) nach einem der vorhergehenden Ansprüche, wobei der Steuerkreis (103) in der zweiten Betriebsart konfiguriert ist, um ein Signal zum Öffnen des ersten Schalters (121) zu erzeugen und konfiguriert ist, um ein Signal zum Schließen des zweiten Schalters (123) höchstens 500 $\mu$s nach dem Erzeugen des Signals zum Öffnen des ersten Schalters (121) zu erzeugen.

**9.** Stromunterbrechungsvorrichtung (1) nach einem der vorhergehenden Ansprüche, wobei ein Überspannungsschutz (112) mit dem zweiten Kondensator (132) parallel geschaltet ist.

**10.** Stromunterbrechungsvorrichtung (1) nach einem der vorhergehenden Ansprüche, die zum Anlegen einer Potentialdifferenz von mindestens gleich 10 kV und eines Stroms von mindestens gleich 1 kA zwischen der ersten und zweiten Klemme dimensioniert ist.

**Claims**

**1.** Current breaking device (1) for high voltage direct current, comprising:

- first and second terminals (101, 102);
- a main conduction line (141) and a secondary conduction line (142) being connected in parallel between the first and second terminals;
- the main conduction line (141) comprising a first controlled switch (121) and connected in series with a circuit including, connected in parallel, a first capacitor (131) and a current limiter (111) configured to maintain the current passing through it at a level less than or equal to a limiting current;
- the secondary conduction line (142) comprising a second controlled switch (123), the main and secondary conduction lines forming an oscillating circuit at the terminals of the first controlled switch when the first and second controlled switches are closed, with an oscillation amplitude at least equal to the limiting current of the current limiter when this current limiter circuit is passed through by said limiting current;
- a control circuit (103) having a first mode of operation in which it is configured to keep the first switch (121) closed and to keep the second switch open (123), and a second mode of operation in which it is configured to maintain an opening command for the first switch (121) and maintain a closing command for the second switch (123).

**2.** Current breaking device (1) according to Claim 1, in which said current limiter (111) is of the superconducting resistor type.

**3.** Current breaking device (1) according to Claim 1 or 2, in which said secondary conduction line comprises a second capacitor connected in series with said second controlled switch.

**4.** Current breaking device (1) according to any one of the preceding claims, in which the resonance frequency of said oscillating circuit formed is less than or equal to 5 kHz and/or the drift of the current in the oscillating circuit relative to time is at most equal to 500 A/$\mu$s.

**5.** Current breaking device (1) according to any one of the preceding claims, in which the resonance frequency of said oscillating circuit formed is greater than or equal to 500 Hz.

6. Current breaking device (1) according to any one of the preceding claims, in which the secondary conduction line comprises an inductor (133) connected in series with said second switch (123).

7. Current breaking device (1) according to any one of the preceding claims, in which said control circuit (103) is configured to detect an overcurrent in the first mode of operation and configured to generate an opening signal for the first switch (121) at most 50 ms after said detection of the overcurrent.

8. Current breaking device (1) according to any one of the preceding claims, in which said control circuit (103) in the second mode of operation is configured to generate an opening signal for the first switch (121) and configured to generate a closing signal for the second switch (123) at least 500 μs after the generation of the opening signal for the first switch (121).

9. Current breaking device (1) according to any one of the preceding claims, in which an overvoltage arrestor (112) is connected in parallel to the second capacitor (132).

10. Current breaking device (1) according to any one of the preceding claims, dimensioned to apply a potential difference at least equal to 10 kV and a current at least equal to 1 kA between the first and second terminals.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**EP 3 230 999 B1**

**Documents brevets cités dans la description**

- EP 0431510 A